# EUROPEAN PATENT APPLICATION

(11) **EP 3 018 619 A1**
(43) Date of publication of application: **11.05.2016**
(21) Application number: 14854892.8
(22) Date of filing: 12.09.2014
(51) Int. Cl.: G06Q 20/08

(54) **ELECTRONIC CERTIFICATE-BASED FUNDS RECEIPT AND PAYMENT SYSTEM**

(71) Applicant: Shenzhen Cifpay Network Bank Technology Co., Ltd., Shenzhen, Guangdong 518000 (CN)
(72) Inventor: ZHANG, Yi, Shenzhen Guangdong 518000 (CN)
(74) Representative: Manitz, Finsterwald & Partner GbR
(86) International application number: PCT/CN2014/086463
(87) International publication number: WO 2016/037370

(57) **Abstract**

The present disclosure relates to the technical field of electronic commerce. A capital receipt and payment system based on electronic voucher is provided with a manufacturer terminal, a bank system, a display server, a client terminal, and a logistics terminal. The manufacturer terminal applies to the bank system for electronic voucher, the display server publishes electronic voucher, the client terminal gets the electronic voucher and request payment to the bank system, the bank system converts amount of the requested payment to request-state and informs the logistics terminal to transfer goods, the logistic terminal guides the goods to destination, and the bank system transfers the requested amount under request-state to a corresponding account after getting receiving information. Accordingly, merchandising location restriction is removed, thereby changing the transaction mode centered on electronic commerce and relying on reputation of electric business platform. Accordingly, goods can be attached to its own properties, thereby autonomously and efficiently circulating on internet, achieving autonomous intelligent transaction, and forming a transaction mode centered on goods without restricted by specified sales place and agent.

## Description

The present disclosure relates to the technical field of electronic commerce, particularly to a capital receipt and payment system based on electronic voucher.

### BACKGROUND OF THE DISCLOSURE

Along with breakthrough progresses in network, communication and information technology, electronic commerce emerges as the times require and develops rapidly, thereby increasingly change people's life and promoting the evolution of social business pattern. However, the real economy still wanders outside the threshold of electronic commerce recently. Goods are mostly displayed as entity in physical store or as picture in online store, thereby forming a store-egoism sale mode. The reputation, quality and authenticity of the goods are mainly judged by customer according to the scale and reputation of the physical store or online store, but unconcerned with the quality of goods itself and the manufacturer thereof. For example, in real life, it is relatively hard for people to believe in authenticity of famous brand goods sold on market stalls. People tend to buy goods in speciality stores, because they believe that what the speciality stores sell is authenticity goods. That's why traditional trade depends on specially appointed merchandising location. In fact, it is usually reported in newspapers and other media that high imitation of counterfeit is sold even in specialty stores and large electric business platforms.

In view of that the internet trade is a kind of back-to-back remote online trade of two sides of the transaction, it is necessary to design a system or device which incorporating whole of the real information of goods and transaction rules in electrical commerce, thereby creating an intelligent and autonomous transaction environment. Accordingly, current trade will be divorced from the store-egoism sale mode, and achieve goods-egoism sale mode. That is, it is important that who manufacture and provide the goods, instead of who sell the goods. Accordingly, it is ensured that the customer can buy authenticity goods on internet. Meanwhile, a large number of manufacturers of the real economy can achieve direct marketing by attaching autonomous intelligent transaction electronic voucher to goods, thereby eliminate counterfeiting in online shopping.

### SUMMARY OF THE DISCLOSURE

It is an object of the present disclosure to provide a capital receipt and payment system based on electronic voucher, for the problem of merchandising location restriction to goods circulation, defective mechanism of trade information integration, defective authentication mechanism of logistics receipt and delivery, and unattainable autonomous intelligent transaction.

A capital receipt and payment system based on electronic voucher includes a manufacturer terminal, a bank system communication connected with the manufacturer terminal, a display server communication connected with the bank system, a client terminal communication connected with the display server, and a logistics terminal communication connected with the bank system. The manufacturer terminal imports settlement information having at least one account and article attribute at least with name and amount, and thereby creating a template of electronic voucher. The bank system stores writable electronic voucher and sends the writable electronic voucher to the display server. The bank system further converts requested amount to request-state after issuing the electronic voucher and after getting payment request information from the client terminal. The bank system still further transfers the requested amount under request-state to an account corresponding to the settlement information after getting receiving information from the client terminal. The display server displays the writable electronic voucher from the bank system and publishes the writable electronic voucher via internet. The client terminal gets the published electronic voucher via internet, writes logistic distribution destination into the electronic voucher, selects preset logistic support information to determine logistic distribution information, and sends the payment request information to the bank system based on the settlement information thereby requesting payment with amount corresponding to the article attribute. The logistics terminal picks up goods corresponding to the article attribute, guides the goods to the destination, and sends the receiving information to the bank system after the bank system getting the payment request information.

In a preferred embodiment, the bank system includes a memory module, a issue module, a payment module and a collection module, the memory module is configured for storing the writable electronic voucher having settlement information with at least one account and article attribute with name and amount, the issue module is configured for issuing the electronic voucher, the payment module is configured for converting requested amount to request-state, the request-state is a state of freezing the requested amount or transferring the requested amount into a preset guarantee account, and the collection module is configured for transferring the requested amount under request-state to an account corresponding to the settlement information after getting receiving information from the logistics terminal.

In a preferred embodiment, the bank system includes a pickup code distributing module and a sign-in code distributing module, the pickup code distributing module is configured for sending a pickup code to the logistics terminal, and the sign-in code distributing module is configured for sending a sign-in code to the client terminal.

In a preferred embodiment, the client terminal is further configured for providing the sign-in code to the logistics terminal after the goods arriving the destination.

In a preferred embodiment, the logistics terminal includes a pickup module, a deliver module and a sign-in module, the pickup module is configured for getting the pickup code and picking up goods corresponding to the article attribute according to the pickup code, the deliver module is configured for guiding the goods to the destination, and the sign-in module is configured for sending the receiving information to the bank system according to the sign-in code.

In a preferred embodiment, the bank system includes a countdown module, the countdown module is configured for writing countdown information into the electronic voucher, and the countdown information includes payment countdown and/or delivery countdown and/or arrival countdown.

In a preferred embodiment, the bank system includes an insurance module, the insurance module is configured for writing electronic insurance contract into the electronic voucher.

In a preferred embodiment, the bank system includes a public power module. The public power module is configured for writing identifying information and/or ownership information and/or authentication information and/or trade status information and/or register information in to the electronic voucher.

The capital receipt and payment system based on electronic voucher has following beneficial effects. By creating electronic voucher corresponding to goods and adapted to internet circulation, merchandising location restriction is removed, thereby changing the transaction mode centered on electronic commerce and relying on reputation of electric business platform or online store, picture browse. Accordingly, goods can be attached to its own properties, such as manufacturers, raw materials and other information, thereby autonomously and efficiently circulating on internet, achieving autonomous intelligent transaction, and forming a transaction mode centered on goods.

### BRIEF DESCRIPTION OF THE DRAWINGS

**FIG 1** is a block diagram of a capital receipt and payment system based on electronic voucher in accordance with a first embodiment.
**FIG 2** is a flow chart of the capital receipt and payment system based on electronic voucher in accordance with in accordance with the first embodiment.
**FIG 3** is a flow chart showing creating and publishing of electronic voucher.
**FIG 4** is a flow chart showing client terminal purchasing the electronic voucher.

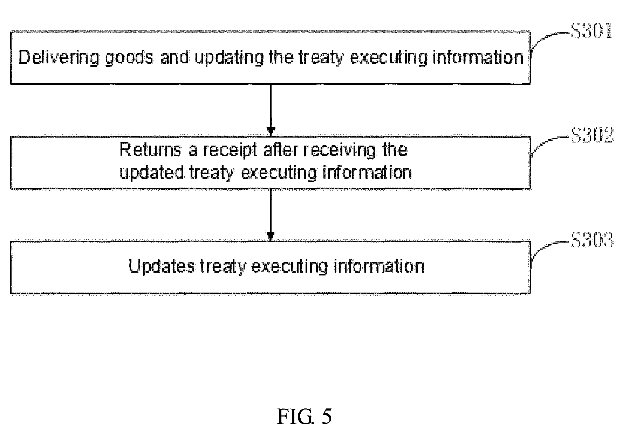

**FIG 5** is a flow chart showing goods delivery.
**FIG 6** is a flow chart showing capital payment.

### DETAILED DESCRIPTION OF THE EMBODIMENTS

The disclosure will be described in detail with the following embodiments and drawings.

The present disclosure provides an electronic voucher generating device and system, which aims at achieving a "bank guarantee, inspection according to order, and payable on receipt" intelligent system. In above device and system, the use of electronic voucher make the trades of goods or service achieve a "direct buying and selling" mode, in which good is directly delivered by manufacturers, and collection of payment is automatically performed, thereby ensuring authenticity goods from the headstream and making the trade more safe and reliable. A public power module is added to facilitate the supervision department to supervise dynamic flow of goods, and ensure the quality of goods. Through the electronic voucher guiding the goods to predetermined destination, there is evidence for unfreezing capitals and payment which ensures the rights and interests of buyers and sellers and achieves "payable on receipt". The employment of electronic vouchers makes the booking issue of the semi-finished or unfinished goods feasible, thereby improving withdrawal ratio of currency from circulation. Meanwhile, the electronic voucher can change the reputation relying on electrical platforms of online stores, and the store-egoism sale mode, thereby achieving an autonomous and efficient circulation of goods on internet and forming goods-egoism sale mode. Accordingly, companies can estimate the goods or service to be provide and record them in form of electronic voucher in electric commerce, which making the companies collect future capitals for benefits (e.g. discounting and factoring), accelerating turnover velocity of capitals, solving the problem of insufficient goods flow, satisfying financing demand of companies, accelerating turnover velocity of company capitals, and promoting social economic development.

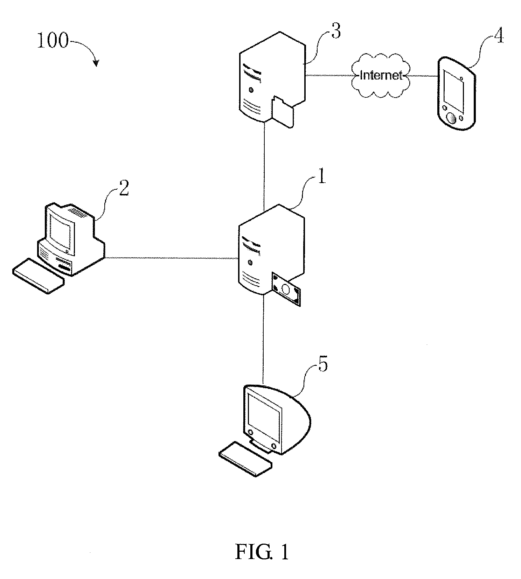

Fig. 1 is a block diagram of a capital receipt and payment system 100 based on electronic voucher in accordance with a first embodiment. As shown in Fig. 1, the capital receipt and payment system 100 includes a manufacturer terminal 2, a bank system 1 communication connected with the manufacturer terminal 2, a display server 3 communication connected with the bank system 1, a client terminal 4 communication connected with the display server 3, and a logistics terminal 5 communication connected with the bank system 1. The so called "communication connected" means a connection with function of synchronizing data, thereby performing data synchronization according to actual needs.

The manufacturer terminal 2 is configured for importing settlement information having at least one account and article attribute at least with name and amount, and thereby the manufacturer terminal 2 creates a template of electronic voucher.

The bank system 1 is configured for storing writable electronic voucher and sending the writable electronic voucher to the display server 3. The bank system 1 is further configured for converting requested amount to request-state after issuing the electronic voucher and after getting payment request information from the client terminal 4. The bank system 1 is still further configured for transferring the requested amount under request-state to an account corresponding to the settlement information after getting receiving information from the client terminal 4. It can be understood that, the request-state is a state of freezing the requested amount of deposit/line of credit or transferring the requested amount of deposit/line of credit into a preset guarantee account. That is, line of credit (credit card) or amount deposit (debit card) is temporarily frozen, or line of credit (credit card) or amount deposit (debit card) is transferred into a preset guarantee account, which can be understood as a kind of acceptance and guarantee.

The bank system 1 is preferred as the bank or third-party payment system, in which receipt and payment terminal issuing electronic voucher refers to checking and approving related information in the electronic voucher (e.g. bank account information of seller, other capital information etc.), writing receipts account information and electronic signature into the electronic voucher and then issuing the electronic voucher, for purpose of identification of the bank or other payment terminal.

The display server 3 is configured for displaying the writable electronic voucher from the bank system 1 and publishing the writable electronic voucher via internet.

The client terminal 4 is configured for getting the published electronic voucher via internet, writing logistic distribution destination into the electronic voucher, selecting preset logistic support information to determine logistic distribution information, and sending the payment request information to the bank system 1 based on the settlement information thereby requesting payment with amount corresponding to the article attribute.

The logistics terminal 5 is configured for picking up goods corresponding to the article attribute, guiding the goods to the destination, and sending the receiving information to the bank system 1 after the bank system 1 getting the payment request information.

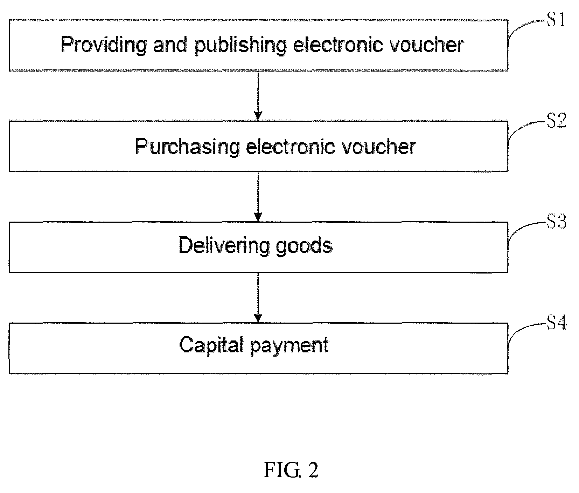

A method for running above system, referring to Fig. 2 which is a flow chart of the capital receipt and payment system based on electronic voucher in accordance with in accordance with the first embodiment, mainly includes following four steps.

S1. Providing and publishing electronic voucher: the manufacturer terminal 2 provides template of electronic voucher with completed configuration, the bank system 1 issues the electronic voucher, and the display server 3 publishes the issued electronic voucher via internet. In detail, one-to-one mapping relation of the data between the display server 3 and the bank system 1 is constructed. That is, data of electronic voucher in display server 3 is synchronized or partly synchronized with that in the bank system 1. It is to be said that the subject who provides the electronic voucher can be manufacturers, dealers or natural person. In other words, the manufacturer terminal 2 is not limited to be manufacturers.

S2. Purchasing electronic voucher: the client terminal 4 gets the electronic voucher and directly sends request information to the bank system 1 for payment with amount corresponding to the article attribute, or sends request information to the bank system 1 via the manufacturer terminal 2 for payment with amount corresponding to the article attribute; the bank system 1 converts requested amount to request-state and simultaneously synchronizes the request-state information to the client terminal 4 and/or manufacturer terminal 2 , and informs the logistics terminal 5 to leave for the address provided by goods owner's or recorded in the electronic voucher and pickup goods corresponding to the article attribute.

S3. Delivering goods: the logistics terminal 5 guides the goods to the destination.

S4. Capital payment: the bank system 1 transfers the requested amount under request-state to an account corresponding to the settlement information after getting receiving information from the logistics terminal 5.

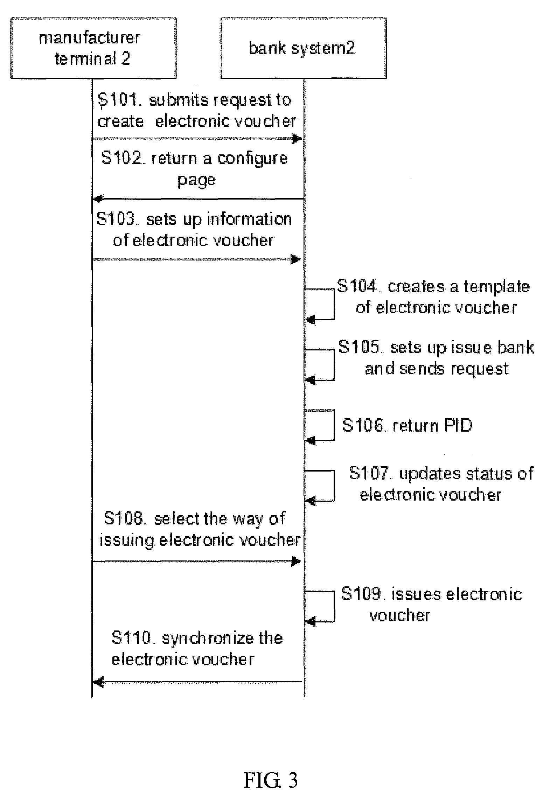

As to step S1, the manufacturer terminal 2 is configured for storing writable electronic voucher which includes settlement information having at least one account and article attribute at least with name and amount; the bank system 1 is configured for writing selectable logistic support information after issuing the electronic voucher; the display server 3 is configured for storing the electronic voucher and publishing the electronic voucher via internet; in fact electronic voucher is constructed recording all transactions, and a preferred procedure of step S1 as shown in Fig. 3 which is a flow chart showing creating and publishing of electronic voucher, includes following steps.

S101. Goods provider submits request to the manufacturer terminal 2 to create electronic voucher.

Preferably, the goods provider completes configurations of goods on local electronic terminal beforehand, and then submits request to the manufacturer terminal 2 to create electronic voucher. As such, the source file of the electronic voucher can be directly stored in the local electronic terminal instead of in the manufacturer terminal 2 or the bank system 1, and merely a connection signal to the manufacturer terminal 2 or the bank system 1 is needed.

The goods provider can also directly completes configurations of goods at the manufacturer terminal 2 by on-line work, and then submits request to the manufacturer terminal 2 to create electronic voucher. Besides, in case of the electronic voucher being created by on-line work, the electronic voucher can be directly stored in the manufacturer terminal 2 or the bank system 1. In case of the electronic voucher being created by off-line work, electronic voucher can also be created according to configurations of goods and stored in local electronic terminal.

S102. The manufacturer terminal 2 accept the request and return a configure page to the goods provider.

S103. The goods provider sets up label information of the electronic voucher in the configure page, i.e. sets up treaty executing information of the electronic voucher, and the electronic voucher includes settlement information having at least one account and article attribute at least with name and amount.

S104. The manufacturer terminal 2 creates a template of electronic voucher configured with article information.

S105. The goods provider sets up issue bank of the bank system 1, and the manufacturer terminal 2 simultaneously sends request of the goods provider to the bank system 1. The bank system 1 is not limited to be issue bank, other platforms supporting internet capital flow can also apply. This step can be performed by configuring an issue module in the bank system 1. The issue module is configured for approving receipts account information wrote in the electronic voucher, writing selectable logistic support information after issuing the electronic voucher, creating electronic voucher, and sending the electronic voucher to the display server 3 and/or the manufacturer terminal 2.

S106. The bank system 1 receives the request to issue electronic voucher, and return port ID to the manufacturer terminal 2. Usually, the port ID is consisted of 8-bit port priority and port number. The port number is little-endian, and the default port priority is 128.

Of course, the request for electronic voucher can also be submitted to the bank by the goods provider, and the bank returns port ID to the goods provider after confirming identity information of the goods provider.

S107. The manufacturer terminal 2 updates the status of the electronic voucher as issued, and synchronous information to the goods provider.

S108. The goods provider selects the way of issuing electronic voucher, generally via preset channel. The channel can be a link or an advertisement, and the channel can also be embedded in applications. This step can be performed by adding an issuing port electrically connected with the goods provider, and the issuing port is for connecting internet thereby issuing the electronic voucher.

S109. The bank system 1 issues the electronic voucher in the way selected by the goods provider.

S110. The manufacturer terminal 2 synchronizes the electronic voucher, and the goods provider or other internet user can check the issued electronic voucher via terminals connected to internet.

As to step S2, the client terminal 4 is configured for browsing and getting the published electronic voucher via internet, writing logistic distribution destination into the electronic voucher, selecting preset logistic support information to determine logistic distribution information, and sending the payment request information to the bank system 1 based on the settlement information thereby requesting payment with amount corresponding to the article attribute; and the client terminal 4 can perform its functions via software such as plug-in, application etc. The bank system 1 converts requested amount to request-state after getting the request information from the client terminal 4, and informs the logistics terminal 5 to leave for wherein the goods is and pickup goods corresponding to the article attribute.

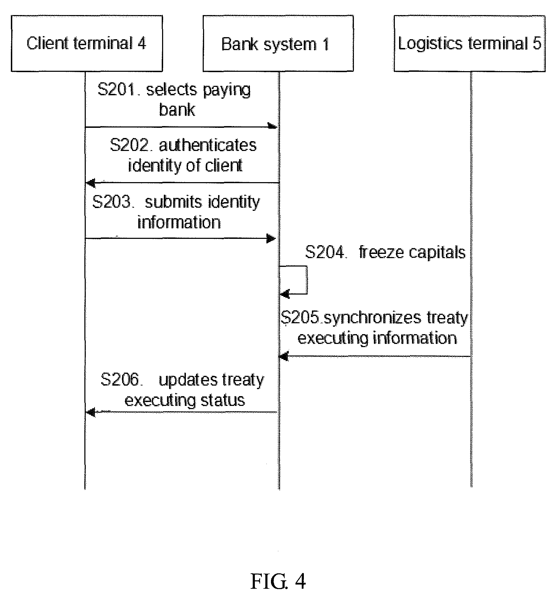

The client terminal 4 is configured for purchasing the electronic voucher, thereby providing credentials for capital frozen or deposit in successive steps of delivering goods. Preferred detail procedure of purchasing the electronic voucher as shown in Fig. 4 which is a flow chart showing client terminal purchasing the electronic voucher, mainly includes following steps.

S201. Client terminal 4 selects paying bank (may be a common terminal with the bank system 1), or platforms supporting internet capital flow to send a payment request. Generally, it is necessary to key corresponding account and password to log in bank account.

S202. The bank system 1 receives the selection of client terminal 4, authenticates identity of the client terminal 4 and return to the client terminal 4.

S203. The client terminal 4 submits identity information and confirms to pay to the electronic voucher.

S204. The bank system 1 converts requested amount to request-state after getting the request information from the client terminal 4, and informs the logistics terminal 5 to pickup goods corresponding to the article attribute. The requested amount is afforded by users of the client terminal 4. This step can be performed by configuring a payment module in the bank system 1. In detail, the payment module is configured for converting requested amount to request-state after getting the request information from the client terminal 4 and informs the logistics terminal 5 to pickup goods corresponding to the article attribute. The request-state is a state of freezing the requested amount or transferring the requested amount into a preset guarantee account.

S205. The bank system 1 synchronizes treaty executing information that the client terminal 4 informs the logistics terminal 5, and return a receipt of treaty executing.

S206. The client terminal 4 updates treaty executing status according to the receipt of treaty executing.

As to step S3, the logistics terminal 5 is configured for guiding the goods to the destination, and sending the receiving information to the bank system 1. The logistics terminal is arranged inside logistics company, thereby making the electronic voucher capable of fully circulating. The logistics terminal 5 can also perform its functions via software such as plug-in, application etc., thereby guiding the goods to the destination in form of door-to-door delivery or other ways.

The logistics terminal 5 ensure the goods to be handed over under monitoring, and efficiently combines the transfer of goods and capital, thereby effectively protecting the rights and interests of buyers and sellers.

Substantially, the logistics terminal 5 performs process of goods delivery as shown in Fig .5 which is a flow chart showing goods delivery, and mainly includes following steps.

S301. Delivering goods to submit treaty executing information, and synchronously updating the treaty executing information of the bank system 1.

S302. The bank system 1 synchronously returns a receipt of executed treaty after receiving the updated treaty executing information. In this step, the logistics company automatically synchronizes logistics status with the bank system 1, e.g. delivered, signed-in, thereby triggering electronic voucher module to send notice of treaty executed and payment to the bank system 2.

S303. The electronic voucher updates treaty executing information in logistics terminal 5.

As to Step S4, the bank system 1 is configured for transferring the requested amount under request-state to an account corresponding to the settlement information after getting receiving information from the logistics terminal 5. The bank system 1 can be software configured inside the bank or platforms supporting internet capital flow. In case of the bank system 1 configured in the bank, capital transfer can be performed in the internal network of bank, thereby ensuring capital safety. In case of the bank system 1 configured in platforms, capital transfer can also be performed between the third party payment companies and banks.

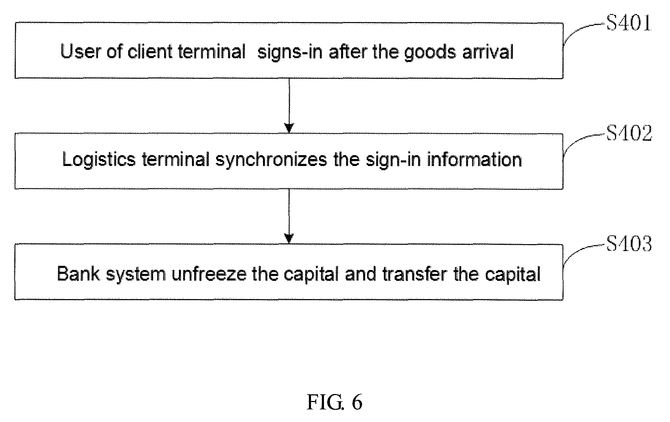

The bank system 1 performs capital payment after the goods is signed-in as shown in Fig. 6 which is a flow chart showing capital payment, as following steps.

S401. User of client terminal 4 signs-in after the goods arrival. Generally, the bank system 1 is configured with a pickup code distributing module and a sign-in code distributing module. The pickup code distributing module is configured for sending a pickup code to the logistics terminal 5. The sign-in code distributing module is configured for sending a sign-in code to the client terminal 5.

The client terminal 4 provides the sign-in code to the logistics terminal 5 after the goods arriving the destination.

The logistics terminal 5 includes a pickup module, a deliver module and a sign-in module. The pickup module is configured for getting the pickup code and picking up goods corresponding to the article attribute according to the pickup code; the deliver module is configured for guiding the goods to the destination; the sign-in module is configured for sending the receiving information to the bank system 1 according to the sign-in code. In another exemplary embodiment, the bank system 1 is configured with a pickup code distributing module and a sign-in code distributing module; the pickup code distributing module is configured for sending a pickup code to the logistics terminal 5; the sign-in code distributing module is configured for sending a sign-in code to the client terminal 5.

Besides, the client terminal 4 can also be configured with a sign-in module to achieve intelligent sign-in. Two preferred embodiment of the sign-in module is disclosed as below.

Plan I: the sign-in module includes a sign-in code distributing mode, a sign-in code confirming module, and a sign-in information sending module, wherein: the sign-in code distributing mode is communication connected with the client terminal 4, thereby distributing a sign-in code to the client terminal 4; the sign-in code confirming module is configured for confirming the sign-in code, after the goods arriving the destination and before the capital unfrozen/transferred to the account of the goods owner, to generate a sign-in information thereby ascertaining the goods has been signed in; the sign-in information sending module is communication connected with the bank system 1, thereby sending the sign-in information to the bank system 1.

This plan is directed against buyer's sign-in of goods, thereby improving the reliability of logistics company distribution by verifying buyer's identity when signed in.

Plan II: the sign-in module includes a sign-in code distributing mode, a sign-in code confirming module, and a sign-in information sending module, wherein: the sign-in code distributing mode is communication connected with the client terminal 4, thereby distributing a sign-in code to the client terminal 4; the sign-in code confirming module is configured for confirming the sign-in code, after the goods arriving the destination and before the capital unfrozen/transferred to the account of the goods owner, to generate a sign-in information thereby ascertaining the goods has been signed in; the sign-in information sending module is communication connected with the bank system 1, thereby sending the sign-in information to the bank system 1.

The system further includes a sign-in code server communication connected with the client terminal 4; the sign-in code server is configured for generating the sign-in code according to request information from a sign-in code request module, and sending the sign-in code to the client terminal 4. The sign-in code server and the manufacturer terminal 2 can share a common server, but performing different functions.

The sign-in module includes the sign-in code request module, a sign-in code confirming module, and a sign-in information sending module, wherein: the sign-in code request module is communication connected with the sign-in code server, thereby request the sign-in code server to generate a sign-in code; the sign-in code confirming module is configured for confirming the sign-in code, after the goods arriving the destination and before the capital unfrozen/transferred to the account of the goods owner, to generate a sign-in information thereby ascertaining the goods has been signed in; the sign-in information sending module is communication connected with the bank system 1, thereby sending the sign-in information to the bank system 1.

This plan is directed against buyer's confirmation of signing in goods to logistics company, thereby effectively protecting the rights and interests of buyers and sellers by paying frozen or guaranteed capital via the sign-in code server.

S402. The logistics terminal 5 synchronizes the sign-in information of the bank system 1 after sign-in of the user.

S403. The bank system 1 unfreezes the capital and transfer the capital to target account or transfer deposit to target account.

For achieving intelligent electronic voucher, the present disclosure further provides following preferred embodiment.
1) The manufacturer terminal 2 or bank system 1 can further includes a countdown module.
   The countdown module is configured for writing countdown information into the electronic voucher, wherein the countdown information includes payment countdown and/or delivery countdown and/or arrival countdown. The countdown module can ensure goods be handed over timely.
   A payment countdown is a countdown of when the payment will be completed. The payment countdown begins at the time when both sides make a deal intention.
   A delivery countdown is a countdown of when the goods will be delivered. The delivery countdown begins at the time when payment is started, thereby ensuring the goods to be delivered timely.
   An arrival countdown is a countdown of when the goods or service will arrive. The arrival countdown begins at the time when the seller delivers goods.
2) The manufacturer terminal 2 or bank system 1 can further includes an insurance module and a public power module.
   The insurance module is configured for writing electronic insurance contract into the electronic voucher; the insurance module ensures the rights and interests of both sides of the transaction, greatly reduce the loss caused by sudden situation during the transaction. The insurance module has electronic insurance contract therein, with no limit in insurance types. Under assurance of the insurance module to the handing over of goods, compensation will be made to the loss caused by failure of traction, thereby greatly ensuring the rights and interests of both sides of the transaction.
   The public power module is configured for writing identifying information and/or ownership information and/or authentication information and/or trade status information and/or register information in to the electronic voucher. The public power module is communicated with public power institutions, thereby having function of registration, identification, and authentication.
3) The manufacturer terminal 2 or bank system 1 can further includes commission module.

The commission module is configured for providing condition to middleman, thereby matchmaking trades and get commission therefrom.

The commission module is written with commission rules information, thereby allowing the buyer to get a partial rebate from the payment to the sellers. When there is the third party (e.g. agent) in the trade, the commission rules can be appointed to ensure benefit of three sides. In detail, the agent gathers a certain amount of electronic voucher from the display server 3, commonly known as purchase. Then, the agent sends the gathered electronic voucher to customers for matchmaking trades, thereby getting corresponding commission after the trade according to the commission rules.

Although the present disclosure has been described with reference to the embodiments thereof and the best modes for carrying out the present disclosure, it is apparent to those skilled in the art that a variety of modifications and changes may be made without departing from the scope of the present disclosure, which is intended to be defined by the appended claims.

## Claims

1. A capital receipt and payment system based on electronic voucher, comprising:
a manufacturer terminal;
a bank system communication connected with the manufacturer terminal;
a display server communication connected with the bank system;
a client terminal communication connected with the display server; and
a logistics terminal communication connected with the bank system;
wherein the manufacturer terminal is configured for importing settlement information having at least one account and article attribute at least with name and amount, and thereby creating a template of electronic voucher;
the bank system is configured for storing writable electronic voucher and sending the writable electronic voucher to the display server, the bank system is further configured for converting requested amount to request-state after issuing the electronic voucher and after getting payment request information from the client terminal, the bank system is still further configured for transferring the requested amount under request-state to an account corresponding to the settlement information after getting receiving information from the client terminal;
the display server is configured for displaying the writable electronic voucher from the bank system and publishing the writable electronic voucher via internet;
the client terminal is configured for getting the published electronic voucher via internet, writing logistic distribution destination into the electronic voucher, selecting preset logistic support information to determine logistic distribution information, and sending the payment request information to the bank system based on the settlement information thereby requesting payment with amount corresponding to the article attribute; and
the logistics terminal is configured for picking up goods corresponding to the article attribute, guiding the goods to the destination, and sending the receiving information to the bank system after the bank system getting the payment request information.

2. The system according to claim 1, wherein the bank system comprises a memory module, an issue module, a payment module and a collection module;
the memory module is configured for storing the writable electronic voucher having settlement information with at least one account and at least article attribute with name and amount;
the issue module is configured for issuing the electronic voucher;
the payment module is configured for converting requested amount to request-state, the request-state is a state of freezing the requested amount or transferring the requested amount into a preset guarantee account; and
the collection module is configured for transferring the requested amount under request-state to an account corresponding to the settlement information after getting receiving information from the logistics terminal.

3. The system according to claim 1, wherein the bank system comprises a pickup code distributing module and a sign-in code distributing module;
the pickup code distributing module is configured for sending a pickup code to the logistics terminal; and
the sign-in code distributing module is configured for sending a sign-in code to the client terminal.

4. The system according to claim 3, wherein the client terminal is further configured for providing the sign-in code to the logistics terminal after the goods arriving the destination.

5. The system according to claim 4, wherein the logistics terminal comprises a pickup module, a deliver module and a sign-in module;
the pickup module is configured for getting the pickup code and picking up goods corresponding to the article attribute according to the pickup code;
the deliver module is configured for guiding the goods to the destination; and
the sign-in module is configured for sending the receiving information to the bank system according to the sign-in code.

6. The system according to claim 1, wherein the bank system comprises a countdown module;
the countdown module is configured for writing countdown information into the electronic voucher, and the countdown information comprises payment countdown and/or delivery countdown and/or arrival countdown.

7. The system according to any of claims 1-6, wherein the bank system comprises an insurance module;
the insurance module is configured for writing electronic insurance contract into the electronic voucher.

8. The system according to claim 7, wherein the bank system comprises a public power module;
the public power module is configured for writing identifying information and/or ownership information and/or authentication information and/or trade status information and/or register information in to the electronic voucher.
